# EUROPEAN PATENT APPLICATION

(11) **EP 4 340 204 A2**
(43) Date of publication of application: **20.03.2024**
(21) Application number: 24155266.0
(22) Date of filing: 20.11.2019
(51) Int. Cl.: H02M 7/483

(54) **IMPROVEMENTS IN OR RELATING TO POWER DISSIPATING CONVERTERS**

(62) Divisional of application: 19275127.9
(71) Applicant: General Electric Technology GmbH, 5400 Baden (CH)
(72) Inventor: JASIM, Omar Fadhel, ST16 1WS Stafford (GB); NOLAN, Andrew, ST16 1WS Stafford (GB)
(74) Representative: Openshaw & Co.

(57) **Abstract**

In the field of high voltage direct current (HVDC) power transmission, there is a need for an improved power dissipating converter (30).

A power dissipating converter (30) for use with a power converter (10) configured to convert between AC power and DC power, comprises first and second DC terminals (12, 14) for connection to a DC network (20). The power dissipating converter (30) also includes a converter limb (32) that extends between the first and second DC terminals (12, 14) and which includes at least one chain-link converter (44), with a power dissipating resistor (46). Each chain-link converter (44) includes a plurality of series-connected chain-link modules (48). The power dissipating converter (30) further includes a controller (70) which is programmed to operate the power dissipating converter (30) in first and second modes, the first mode being an inactive mode in which the power dissipating converter (30) is prevented from exchanging current with a DC network (20) connected in-use to the first and second DC terminals (12, 14) and no power from the DC network (20) is dissipated by either power dissipating resistor (46), and the second mode being an active mode in which the power dissipating converter (30) exchanges a discharge current with the DC network (20) and power from the DC network (20) is dissipated by each power dissipating resistor (46). The controller (70), when operating the power dissipating converter (30) in the first inactive mode, is programmed to prevent an exchange of current with the in-use connected DC network (20) by instructing the chain-link modules (48) in each chain-link converter (44) to store an individual energy amount whereby the cumulative voltage source provided by the sum of all of the individual energy amounts in a respective chain-link converter (44) is equal to the DC voltage presented at the corresponding DC terminal (12, 14). The power dissipating converter is characterised in that the controller (70), when operating the power dissipating converter (30) in the first inactive mode, is programmed to instruct the chain-link modules (48) in a respective chain-link converter (44) to store an individual energy amount commensurate with rate at which each individual chain-link module (48) discharges energy. The power dissipating converter (30) further comprises individual module control electronics associated with each chain-link module (48) and configured to control and monitor the individual amount of energy provided by each chain-link module (48) after the controller (70) has instructed the chain-link modules (48) to store the individual amount, wherein the individual module control electronics are configured to use a stray current flowing through the power dissipating converter (3) to replenish a small amount of energy lost from a corresponding chain-link module (48).

## Description

This invention relates to a power dissipating converter, for use with a power converter configured to convert between alternating current (AC) power and direct current (DC) power, and a method of controlling such a power dissipating converter.

In HVDC power transmission networks AC power is typically converted to DC power for transmission via overhead lines, under-sea cables and/or underground cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance. DC power is also transmitted directly from offshore wind parks to onshore AC power transmission networks

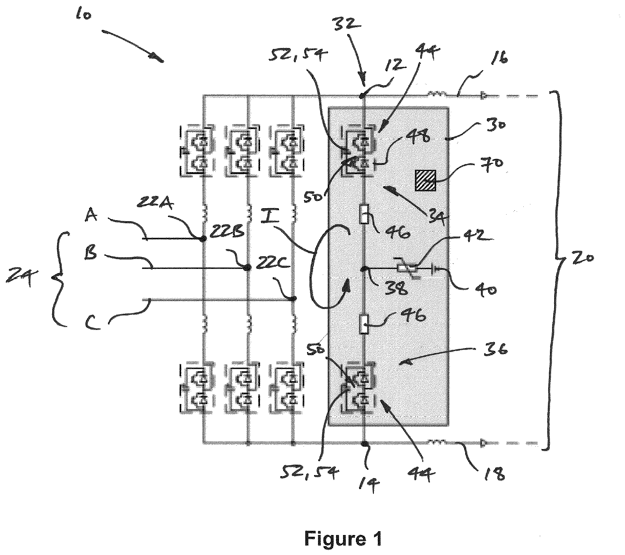

The conversion between DC power and AC power is utilized where it is necessary to interconnect DC and AC networks. In any such power transmission network, converters (i.e. power converters) are required at each interface between AC and DC power to affect the required conversion from AC to DC or from DC to AC. Such power converters may take the form of a voltage source converter 10, as shown in Figure 1, to perform power conversion, although other types of power converter are also possible.

In the example shown the known power converter 10, i.e. voltage source converter, extends between first and second DC terminals 12, 14, which in use are connected with first and second transmission cables 16, 18 of a DC network 20, that in this example takes the form of a DC link to an offshore wind park (not shown). The known power converter 10 is also connected via respective AC terminals 22A, 22B, 22C to three phases A, B, C of an onshore three-phase AC network 24. Other power converter and AC/DC network configurations are, however, also possible.

The DC power received from the DC network 20, i.e. the DC power from the wind park, will, in most instances, be generated continuously, and so creates challenges for the receiving onshore AC network 24, particularly when the AC network 24 is unable to accept the power, e.g. because of a fault with the power converter 10 or in the associated AC network 24 which may result in a reduced power demand by the AC network 24.

Such onshore power converters 10 are therefore sometimes used in combination with a power dissipating converter which temporarily absorbs some or all of the DC power transmitted from the offshore DC network 20 in circumstances when the onshore AC network 24 is unable to accept this power.

The power dissipating converter within such a power conversion scheme is sometimes known as a Dynamic Braking System (DBS).

According to a first aspect of the invention there is provided a power dissipating converter for use with a power converter configured to convert between AC power and DC power, the power dissipating converter comprising:
first and second DC terminals for connection to a DC network;
a converter limb extending between the first and second DC terminals and including first and second limb portions separated by a ground terminal for connection to ground, each limb portion including a chain-link converter connected in series with a power dissipating resistor, each chain-link converter including a plurality of series-connected chain-link modules, each chain-link module including a plurality of switching elements connected in parallel with an energy storage device whereby each chain-link module is selectively operable to provide a voltage source and the corresponding chain-link converter is selectively operable to provide a stepped variable voltage source; and
a controller programmed to operate the power dissipating converter in first and second modes, the first mode being an inactive mode in which the power dissipating converter is prevented from exchanging current with a DC network connected in-use to the first and second DC terminals and no power from the DC network is dissipated by either power dissipating resistor, and the second mode being an active mode in which the power dissipating converter exchanges a discharge current with the DC network and power from the DC network is dissipated by each power dissipating resistor,
the controller, when operating the power dissipating converter in the first inactive mode, being programmed to prevent an exchange of current with the in-use connected DC network by controlling the chain-link modules in each chain-link converter to store an individual energy amount whereby the cumulative voltage source provided by the sum of all of the individual energy amounts in a respective chain-link converter is equal to the DC voltage presented at the corresponding DC terminal.

Having each chain-link converter provide a voltage source that is the sum of all of the individual voltage sources provided by the chain-link modules therein, means that the energy, i.e. voltage, each individual chain-link module has to store is substantially less than, e.g. the amount of energy it is required to store during operation of the power dissipating converter in the second active mode.

The requirement for each individual chain-link module in a given chain-link converter to store only a reduced amount of energy allows the controller to maintain the power dissipating converter in the inactive mode for longer than would ordinarily be the case with, e.g. a conventional power dissipating converter, and thereby reduces the losses incurred by the power dissipating converter of the invention.

The controller is able to maintain the power dissipating converter the inactive mode for longer because the lower energy storage requirement of each chain-link module can be maintained to a degree by, e.g. very low stray current flowing through the power dissipating converter when operating in the inactive mode.

Optionally the controller, when operating the power dissipating converter in the first inactive mode, is programmed to control the chain-link modules in a respective chain-link converter to store an equal amount of energy.

Having the chain-link modules store an equal amount of energy helps to ensure that each module experiences a similar duty cycle, such that the modules should degrade at essentially the same rate.

In a preferred embodiment of the invention the controller, when operating the power dissipating converter in the first inactive mode, is programmed to control the chain-link modules in a respective chain-link converter to store an amount of energy commensurate with the rate at which each individual chain-link module discharges energy.

In a further preferred embodiment of the invention the controller is programmed to control those chain-link modules with a tendency to discharge more quickly to store more energy and those chain-link modules with a tendency to discharge more slowly to store less energy.

The inclusion of a controller programmed as set out above allows the different rates of energy discharge by respective chain-link modules, e.g. because of the rate at which corresponding ancillary control electronics draw energy from the said chain-link modules, to be accommodated, such that the cumulative voltage source provided by a given chain-link converter can be maintained at a desired operative level for as long as possible, thereby allowing the corresponding power dissipating converter to be operated in the, lower loss generating, first inactive mode for as long as possible.

The controller may be programmed, when switching the power dissipating converter to operate in the second active mode, to control the energy storage device in each chain-link module to store an increased amount of energy necessary to operate the power dissipating converter in the said second active mode.

Such a controller permits the power dissipating converter of the invention to achieve the much lower energy losses associated with operating in the inactive mode for an extended period of time, and also extends the service life of the power dissipating converter of the invention by reducing the amount of switching of individual chain-link modules needed. Such a controller provides the aforementioned benefits while also permitting the power dissipating converter to provide its normal energy dissipating functionality when needed.

Optionally the controller is further programmed to operate the power dissipating converter in a third mode, the third mode being a balancing mode in which the controller causes a balancing current, smaller than the discharge current, to flow through each chain-link converter.

Having a controller so programmed allows for a modest degree of charging and discharging of the energy storage device in one or more chain-link modules to be carried out to adequately share, or balance, amongst the chain-link modules the amount of energy so stored, e.g. in circumstances when the degree of charging provided by very low stray current flowing through the power dissipating converter when operating in the inactive mode becomes inadequate, without the need to utilise the much larger discharge current which would otherwise result in significantly higher energy losses.

In a still further preferred embodiment of the invention the controller is further programmed to determine one of a maximum or minimum voltage stored by an individual energy storage device, to compare the said maximum or minimum individual stored voltage with the average voltage stored by all energy storage devices, and to operate the power dissipating converter in the third balancing mode and thereby cause the balancing current to flow when the difference between the said maximum or minimum individual stored voltage and the average voltage stored by all energy storage devices exceeds a predetermined threshold.

Programming the controller in this manner advantageously automates when the power dissipating converter is controlled to operate in the third balancing mode.

According to a second aspect of the invention there is provided a method of controlling a power dissipating converter as defined in the appended independent method claim.

The method of the invention shares the benefits of the corresponding features of the power dissipating converter of the invention.

There now follows a brief description of preferred embodiments of the invention, by way of non-limiting example, with reference being made to the following figures in which:
Figure 1 shows a schematic view of a power conversion scheme incorporating an onshore power converter together with a power dissipating converter according to a first embodiment of the invention.

A power dissipating converter 30 according to a first embodiment of the invention is shown schematically in Figure 1.

The power dissipating converter 30 comprises first and second DC terminals 12, 14, as described hereinabove, along with a converter limb 32 which extends between the first and second DC terminals 12, 14.

The converter limb 32 includes first and second limb portions 34, 36 that are separated by a ground terminal 38 which is for connection to ground 40, preferably via a surge arrestor 42.

Each limb portion 34, 36 includes a chain-link converter 44 which is connected in series with a power dissipating resistor 46. In turn, each chain-link converter 44 includes a plurality of series-connected chain-link modules 48, only one of which is shown in Figure 1.

Each chain-link module 48 includes a plurality of switching elements 50 that are connected in parallel with an energy storage device 52 in the form of a capacitor 54. In the embodiment shown each switching element 50 includes a semiconductor device in the form of, e.g. an Insulated Gate Bipolar Transistor (IGBT), which is connected in parallel with an anti-parallel diode. It is, however, possible to use other semiconductor devices, and a different type of energy storage device 52 may also be employed.

In the embodiment shown, each chain-link module 48 includes only a first pair of switching elements 50 that are connected in parallel with the capacitor 54 in a known half-bridge arrangement to define a 2-quadrant unipolar module. Switching of the switching elements 50 selectively directs current through the capacitor 54 or causes current to bypass the capacitor 54 such that the chain-link module 48 can provide zero or positive voltage and can conduct current in two directions.

In other embodiments, however, chain-link modules in which first and second pairs of switching elements and a capacitor are connected in a known full bridge arrangement to define a 4-quadrant bipolar module, may also be used instead of some or all of the aforementioned 2-quadrant unipolar modules.

In any event, nevertheless, each chain-link module 48 is selectively operable to provide a voltage source and the corresponding chain-link converter 44 is selectively operable to provide a stepped variable voltage source.

The power dissipating converter 30 also includes a controller 70 that is programmed to operate the power dissipating converter 30 in first and second modes, the first mode being an inactive mode and the second mode being an active mode.

In the first inactive mode, the power dissipating converter 30 is prevented from exchanging current with the DC network 20 with which it is in-use connected via the first and second DC terminals 12, 14 and no power from the DC network 20 is dissipated by either power dissipating resistor 4.

More particularly the controller 70, when operating the power dissipating converter 30 in the first inactive mode, is programmed to prevent an exchange of current with the in-use connected DC network 20 by controlling the chain-link modules 48 in each chain-link converter 44 to store an individual energy amount whereby the cumulative voltage source provided by the sum of all of the individual energy amounts in a respective chain-link converter 44 is equal to the DC voltage presented at the corresponding DC terminal 12, 14.

In other words, the energy storage device 52, i.e. capacitor 54, in each chain-link module 48 within each chain-link converter 44 is required to store a particular, individual energy amount so that when summed together all of the individual energy amounts provide a voltage source that is equal to the DC voltage presented at the corresponding DC terminal 12, 14, i.e. the cumulative voltage source provided by the chain-link converter 44 in the first limb portion 34 is equal to the DC voltage presented at the first DC terminal 12 by the first transmission cable 16, such that effectively no current flows through the first limb portion 34, and the cumulative voltage source provided by the chain-link converter 44 in the second limb portion 36 is equal to the DC voltage presented at the second DC terminal 14 by the second transmission cable 18, such that effectively no current flows through the second limb portion 36.

Having each chain-link converter 44 provide a voltage source in the foregoing manner, i.e. by summing together the individual voltage sources provided by all of the corresponding chain-link modules 48, is different to providing a voltage source by having only a select number of chain-link modules 48 switched into circuit to provide their respective individual voltage sources. This is because the latter requires the energy storage devices in the selected chain-link modules 48 to store a much larger amount of energy, indeed a larger amount of energy commensurate with the amount needed for normal operation, e.g. when the power dissipating converter 30 is operating in the second active mode. In contrast, utilising all of the chain-link modules 48 to cumulatively provide the required voltage source means that each individual chain-link module 48 needs to store far less energy.

In the embodiment shown, the controller 70 is programmed to control the chain-link modules 48 in each chain-link converter 44 to store an amount of energy commensurate with the rate at which each individual chain-link module 48 discharges energy.

More particularly, the controller 70 is programmed to control those chain-link modules 48 with a tendency to discharge more quickly to store more energy and those chain-link modules 48 with a tendency to discharge more slowly to store less energy.

In other embodiments of the invention (not shown) the controller 70 may instead be programmed to control the chain-link modules 48 in one or both of the chain-link converters 44 to store an equal amount of energy.

In any event, when the controller 70 is operating the power dissipating converter 30 in the aforementioned first inactive mode, it does so in a so-called "blocked" manner. This means that once the controller 70 has instructed each chain-link converter 44 to provide a cumulative voltage source that matches the DC voltage presented at the corresponding DC terminal 12, 14, the controller 70 does not control or further monitor the individual energy sources, i.e. voltages, provided by each chain-link module 48 within each chain-link converter 44. These control and monitoring functions are instead handled by individual module control electronics associated with each chain-link module 48.

In practice, even when the power dissipating converter 30 is operating in the first inactive mode, there will occasionally be a mismatch between the cumulative voltage source provided by one or both of the chain-link converters 44 and the DC voltage presented at the corresponding DC terminal 12, 14, e.g. because of a need to draw a small amount of energy from a given chain-link module 48 to power the associated module control electronics and the commensurate minor depletion in the individual energy amount, i.e. voltage, that the said chain-link module 48 can provide.

Such an occasional mismatch causes a very low stray current, typically of only a few amps, to flow through the power dissipating converter 30, even though it is operating in the first inactive mode.

When occasionally flowing, the very low stray current can, however, be used to replenish the small amount of energy drawn, or otherwise lost, from one or more individual chain-link modules 48. Such modest recharging of the individual chain-link modules 48 nevertheless can, in turn, help to maintain the power dissipating converter 30 in the inactive mode for an extended period of time.

Meanwhile, when the controller 70 is operating the power dissipating converter 30 in the second active mode the power dissipating converter 30 exchanges a discharge current with the DC network 20 and power from the DC network 20 is dissipated by each power dissipating resistor 46.

More particularly, when operating the power dissipating converter 30 in the second active mode, the controller 70 is programmed to bypass the energy storage devices 52, i.e. capacitors 54, in all of the chain-link modules 48 in at least one chain-link converter 44 whereby the DC voltage presented at the corresponding DC terminal 12, 14 by the corresponding transmission cable 16 is applied to the corresponding power dissipating resistor 46, the discharge current flows and power is dissipated by the said corresponding power dissipating resistor 46.

The controller 70 may, optionally, during the remaining period that the power dissipating converter 30 is operating in the second active mode, be programmed to carry out a chain-link module 48 capacitor voltage and energy balancing activity. The controller 70 does this by controlling each chain-link converter 44 to provide a stepped variable voltage source which during a given operating period is both greater than and less than the DC voltage presented at the corresponding DC terminal 12, 14, whereby the discharge current is controlled to flow both into and out of the corresponding limb portion 34, 36 in order to affect the said voltage and energy balancing.

In the embodiment shown, the controller 70 is programmed, when switching the power dissipating converter 30 to operate in the second active mode, to control the energy storage device 52, i.e. capacitor 54, in each chain-link module 48 to store an increased amount of energy necessary to operate the power dissipating converter 30 in the said second active mode. In this manner, the controller 70 utilises the discharge current to provide the required charging of each capacitor 54.

In this regard, the discharge current is typically several kiloamps, and so is much larger than the very low stray current of a few amps that occasionally flows through the power dissipating converter 30. As a consequence the discharge current is much more effective at charging the capacitors 54 in individual chain-link modules 48 to the required extent in a very short time.

The controller 70 is still further programmed to operate the power dissipating converter 30 in a third mode, which is a balancing mode in which the controller 70 causes a balancing current I, smaller than the discharge current, to flow through each chain-link converter 44. The balancing current I is usually around 10A to 15A, and so while considerably smaller than the discharge current, it is nevertheless larger than the occasional very low stray current. The balancing current I is, therefore, more effective than the stray current at charging individual chain-link modules 48.

Moreover, the controller 70 is programmed to determine a minimum voltage stored by an individual energy storage device 52, i.e. capacitor 54, to compare the said minimum individual stored voltage with the average voltage stored by all energy storage devices 52, and to operate the power dissipating converter 30 in the third balancing mode and thereby cause the balancing current I to flow, when the difference between the minimum individual stored voltage and the average voltage stored by all energy storage devices 52 exceeds a predetermined threshold.

In other embodiments of the invention, the controller may instead determine a maximum voltage stored by an individual energy storage device, and compare that to the average voltage stored in order to determine when to operate the power dissipating converter in the third balancing mode.

In use, the power dissipating converter 30 of the invention is controlled according to a method comprising the steps of:
(a) selectively operating the power dissipating converter 30 in a first mode, the first mode being an inactive mode in which the power dissipating converter 30 is prevented from exchanging current with a DC network 20 connected in-use to the first and second DC terminals 12, 14 and no power from the DC network 20 is dissipated by either power dissipating resistor 46;
(b) selectively operating the power dissipating converter 30 in a second mode, the second mode being an active mode in which the power dissipating converter 30 exchanges a discharge current with the DC network 20 and power from the DC network 20 is dissipated by each power dissipating resistor 46; and
(c) when operating the power dissipating converter 30 in the first inactive mode, preventing an exchange of current with the in-use connected DC network 20 by controlling the chain-link modules 48 in each chain-link converter 44 to store an individual energy amount whereby the cumulative voltage source provided by the sum of all of the individual energy amounts in a respective chain-link converter 44 is equal to the DC voltage presented at the corresponding DC terminal 12, 14.

Various aspects and embodiments of the present invention are defined by the following numbered clauses:
1. A power dissipating converter (30) for use with a power converter (10) configured to convert between AC power and DC power, the power dissipating converter (30) comprising:
   first and second DC terminals (12, 14) for connection to a DC network (20);
   a converter limb (32) extending between the first and second DC terminals (12, 14) and including first and second limb portions (34, 36) separated by a ground terminal (38) for connection to ground (40), each limb portion (34, 36) including a chain-link converter (44) connected in series with a power dissipating resistor (46), each chain-link converter (44) including a plurality of series-connected chain-link modules (48), each chain-link module (48) including a plurality of switching elements (50) connected in parallel with an energy storage device (52) whereby each chain-link module (48) is selectively operable to provide a voltage source and the corresponding chain-link converter (44) is selectively operable to provide a stepped variable voltage source; and
   a controller (70) programmed to operate the power dissipating converter (30) in first and second modes, the first mode being an inactive mode in which the power dissipating converter (30) is prevented from exchanging current with a DC network (20) connected in-use to the first and second DC terminals (12, 14) and no power from the DC network (20) is dissipated by either power dissipating resistor (46), and the second mode being an active mode in which the power dissipating converter (30) exchanges a discharge current with the DC network (20) and power from the DC network (20) is dissipated by each power dissipating resistor (46),
   the controller (70), when operating the power dissipating converter (30) in the first inactive mode, being programmed to prevent an exchange of current with the in-use connected DC network (20) by controlling the chain-link modules (48) in each chain-link converter (44) to store an individual energy amount whereby the cumulative voltage source provided by the sum of all of the individual energy amounts in a respective chain-link converter (44) is equal to the DC voltage presented at the corresponding DC terminal (12, 14).
2. A power dissipating converter (30) according to clause 1 wherein the controller (70), when operating the power dissipating converter (30) in the first inactive mode, is programmed to control the chain-link modules (48) in a respective chain-link converter (44) to store an equal amount of energy.
3. A power dissipating converter (30) according to clause 1 wherein the controller (70), when operating the power dissipating converter (30) in the first inactive mode, is programmed to control the chain-link modules (48) in a respective chain-link converter (44) to store an amount of energy commensurate with the rate at which each individual chain-link module (48) discharges energy.
4. A power dissipating converter (30) according to clause 3 wherein the controller (70) is programmed to control those chain-link modules (48) with a tendency to discharge more quickly to store more energy and those chain-link modules (48) with a tendency to discharge more slowly to store less energy.
5. A power dissipating converter (30) according to any preceding clause wherein the controller (70) is programmed, when switching the power dissipating converter (30) to operate in the second active mode, to control the energy storage device (52) in each chain-link module (48) to store an increased amount of energy necessary to operate the power dissipating converter (30) in the said second active mode.
6. A power dissipating converter (30) according to any preceding clause wherein the controller (70) is further programmed to operate the power dissipating converter (30) in a third mode, the third mode being a balancing mode in which the controller (70) causes a balancing current (I), smaller than the discharge current, to flow through each chain-link converter (44).
7. A power dissipating converter (30) according to clause 6 wherein the controller (70) is further programmed to determine one of a maximum or minimum voltage stored by an individual energy storage device (52), to compare the said maximum or minimum individual stored voltage with the average voltage stored by all energy storage devices (52), and to operate the power dissipating converter (30) in the third balancing mode and thereby cause the balancing current (I) to flow when the difference between the said maximum or minimum individual stored voltage and the average voltage stored by all energy storage devices (52) exceeds a predetermined threshold.
8. A method of controlling a power dissipating converter (30) for use with a power converter (10) configured to convert between AC power and DC power, the power dissipating converter (30) comprising: first and second DC terminals (12, 14) for connection to a DC network (20); and a converter limb (32) extending between the first and second DC terminals (12, 14) and including first and second limb portions (34, 36) separated by a ground terminal (38) for connection to ground (40), each limb portion (34, 36) including a chain-link converter (44) connected in series with a power dissipating resistor (46), each chain-link converter (44) including a plurality of series connected chain-link modules (48), and each chain-link module (48) including a plurality of switching elements (50) connected in parallel with an energy storage device (52) whereby each chain-link module (48) is selectively operable to provide a voltage source and the corresponding chain-link converter (44) is selectively operable to provide a stepped variable voltage source,
   the method comprising the steps of:
   (a) selectively operating the power dissipating converter (30) in a first mode, the first mode being an inactive mode in which the power dissipating converter (30) is prevented from exchanging current with a DC network (20) connected in-use to the first and second DC terminals (12, 14) and no power from the DC network (20) is dissipated by either power dissipating resistor (46);
   (b) selectively operating the power dissipating converter (30) in a second mode, the second mode being an active mode in which the power dissipating converter (30) exchanges a discharge current with the DC network (20) and power from the DC network (20) is dissipated by each power dissipating resistor (46); and
   (c) when operating the power dissipating converter (30) in the first inactive mode, preventing an exchange of current with the in-use connected DC network (20) by controlling the chain-link modules (48) in each chain-link converter (44) to store an individual energy amount whereby the cumulative voltage source provided by the sum of all of the individual energy amounts in a respective chain-link converter (44) is equal to the DC voltage presented at the corresponding DC terminal (12, 14).

## Claims

1. A power dissipating converter (30) for use with a power converter (10) configured to convert between AC power and DC power, the power dissipating converter (30) comprising:
first and second DC terminals (12, 14) for connection to a DC network (20);
a converter limb (32) extending between the first and second DC terminals (12, 14) and including at least one chain-link converter (44), with a power dissipating resistor (46), the chain-link converter (44) including a plurality of series-connected chain-link modules (48); and
a controller (70) programmed to operate the power dissipating converter (30) in first and second modes, the first mode being an inactive mode in which the power dissipating converter (30) is prevented from exchanging current with a DC network (20) connected in-use to the first and second DC terminals (12, 14) and no power from the DC network (20) is dissipated by the power dissipating resistor (46), and the second mode being an active mode in which the power dissipating converter (30) exchanges a discharge current with the DC network (20) and power from the DC network (20) is dissipated by the power dissipating resistor (46),
the controller (70), when operating the power dissipating converter (30) in the first inactive mode, being programmed to prevent an exchange of current with the in-use connected DC network (20) by instructing the chain-link modules (48) in each chain-link converter (44) to store an individual energy amount whereby the cumulative voltage source provided by the sum of all of the individual energy amounts in a respective chain-link converter (44) is equal to the DC voltage presented at the corresponding DC terminal (12, 14), and
the power dissipating converter being **characterised in that** the controller (70), when operating the power dissipating converter (30) in the first inactive mode, is programmed to instruct the chain-link modules (48) in a respective chain-link converter (44) to store an individual energy amount commensurate with rate at which each individual chain-link module (48) discharges energy,
the power dissipating converter (30) further comprising individual module control electronics associated with each chain-link module (48) and configured to control and monitor the voltage of the energy storage device (52) of each chain-link module (48) after the controller (70) has instructed the chain-link modules (48) to store the individual amount,
wherein the individual module control electronics are configured to use a stray current flowing through the power dissipating converter (30) to replenish a small amount of energy lost from a corresponding chain-link module (48).

2. A power dissipating converter (30) according to Claim 1 wherein the controller (70) is programmed to control those chain-link modules (48) with a tendency to discharge more quickly to store more energy and those chain-link modules (48) with a tendency to discharge more slowly to store less energy.

3. A power dissipating converter (30) according to Claim 1 or Claim 2 wherein the controller (70) is programmed, when switching the power dissipating converter (30) to operate in the second active mode, to control the energy storage device (52) in each chain-link module (48) to store an increased amount of energy necessary to operate the power dissipating converter (30) in the said second active mode.

4. A power dissipating converter (30) according to any preceding claim wherein the controller (70) is further programmed to operate the power dissipating converter (30) in a third mode, the third mode being a balancing mode in which the controller (70) causes a balancing current (I), smaller than the discharge current, to flow through each chain-link converter (44).

5. A power dissipating converter (30) according to Claim 4 wherein the controller (70) is further programmed to determine one of a maximum or minimum voltage stored by an individual energy storage device (52), to compare the said maximum or minimum individual stored voltage with the average voltage stored by all energy storage devices (52), and to operate the power dissipating converter (30) in the third balancing mode and thereby cause the balancing current (I) to flow when the difference between the said maximum or minimum individual stored voltage and the average voltage stored by all energy storage devices (52) exceeds a predetermined threshold.

6. A method of controlling a power dissipating converter (30) for use with a power converter (10) configured to convert between AC power and DC power, the power dissipating converter (30) comprising: first and second DC terminals (12, 14) for connection to a DC network (20); and a converter limb (32) extending between the first and second DC terminals (12, 14) and including at least one chain-link converter (44), with a power dissipating resistor (46), each chain-link converter (44) including a plurality of series-connected chain-link modules (48),
the method comprising the steps of:
(a) selectively operating the power dissipating converter (30) in a first mode, the first mode being an inactive mode in which the power dissipating converter (30) is prevented from exchanging current with a DC network (20) connected in-use to the first and second DC terminals (12, 14) and no power from the DC network (20) is dissipated by the power dissipating resistor (46);
(b) selectively operating the power dissipating converter (30) in a second mode, the second mode being an active mode in which the power dissipating converter (30) exchanges a discharge current with the DC network (20) and power from the DC network (20) is dissipated by the power dissipating resistor (46); and
(c) when operating the power dissipating converter (30) in the first inactive mode, preventing an exchange of current with the in-use connected DC network (20) by controlling the chain-link modules (48) in each chain-link converter (44) to store an individual energy amount whereby the cumulative voltage source provided by the sum of all of the individual energy amounts in a respective chain-link converter (44) is equal to the DC voltage presented at the corresponding DC terminal (12, 14),
the method of controlling a power dissipating convertor (30) being **characterised in that** when operating the power dissipating convertor (30) in the first inactive mode the chain-link modules (48) in a respective chain-link converter (44) are instructed to store an individual energy amount commensurate with the rate at which each individual chain-link module (48) discharges energy, and individual module control electronics associated with each chain-link module (48) control and monitor the voltage of the energy storage device (52) of each chain-link module (48) after the chain-link modules (48) have been instructed to store the individual energy amount, wherein the individual module control electronics are configured to use a stray current flowing through the power dissipating converter (30) to replenish a small amount of energy lost from a corresponding chain-link module (48).
